(19) Europäisches Patentamt / European Patent Office / Office européen des brevets

(11) **EP 2 529 969 B1**

(12) **EUROPEAN PATENT SPECIFICATION**

(45) Date of publication and mention
of the grant of the patent:
**17.12.2014 Bulletin 2014/51**

(51) Int Cl.:
**B60K 25/02** (2006.01)     **F16D 13/38** (2006.01)
**F16D 13/42** (2006.01)     **H02K 7/10** (2006.01)

(21) Application number: **12170702.0**

(22) Date of filing: **04.06.2012**

(54) **Motor generator**

Motorgenerator

Générateur de moteur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2011 IT PD20110183**

(43) Date of publication of application:
**05.12.2012 Bulletin 2012/49**

(73) Proprietor: **Mecaprom Technologies Corporation
Italia SRL A Socio Unico
24121 Bergamo (IT)**

(72) Inventor: **Regis, Fabrizio
10020 Casalborgone (TO) (IT)**

(74) Representative: **Gallo, Luca et al
Gallo & Partners S.r.l.
Via Rezzonico, 6
35131 Padova (IT)**

(56) References cited:
**EP-A2- 2 221 496     WO-A1-2010/100747
DE-U1- 20 000 343     GB-A- 2 450 985
JP-A- 2005 121 147     US-A- 2 493 894
US-A- 3 240 301     US-A1- 2006 087 185**

**Description**

Field of application

The present invention regards a motor generator according to the preamble of the independent claim.

The present motor generator is intended to be advantageously employed in vehicles with hybrid propulsion, intended for movement both in urban and extra-urban settings. In particular, the present motor generator is preferably intended to be installed on board hybrid propulsion vehicles according to the series hybrid scheme.

The invention is therefore situated in the field of the automobile industry and in particular in the field of production of vehicles with mixed electric and combustion propulsion.

State of the art

Today, there is the particular need to limit the pollution produced by motorized transport means, especially in their use in urban areas.

In order to attain such objective of limiting polluting emissions, automobile production companies have introduced so-called hybrid propulsion vehicles on the market, i.e. vehicles provided with at least two different types of power generators useful for propulsion, typically including an electric motor and an endothermic engine.

The electrical energy necessary for the propulsion by means of electric motor can be stored as a non-limiting example in storage groups based on lithium chemistry (lithium-ions, lithium-polymers) or in supercapacitors.

As will be explained below, these known hybrid propulsion vehicles are geared to combine both the advantages of internal combustion engines and those of electric motors, in order to reduce the polluting emissions while offering performances and functioning autonomy that are competitive with respect to conventional motor vehicles exclusively moved by internal combustion engines.

In particular, the internal combustion engine transforms the chemical energy of the fuel, which can be easily supplied by the existing widespread refueling network, with rather high efficiency even if within limited intervals of engine functioning speeds. However, with respect to an electric motor, the functioning of an internal combustion engine has high environmental impact, both in terms of gas emissions and acoustic emissions, particularly when employed in a wide range of rotational speeds.

The electric motor, on the other hand, has the advantage of converting the electrical energy into mechanical energy with greater efficiency and functioning versatility than the internal combustion engine; however, it has the drawback that it can arrange only a small quantity of energy on board the vehicle, and currently such energy cannot be as easily and quickly supplied as the fossil fuels (gas, diesel, LPG, methane etc.).

The hybrid propulsion vehicles currently available on the market mainly employ two different hybrid propulsion configurations, known as series hybrid and parallel hybrid. In the parallel hybrid configuration, the propulsion group includes, in addition to the endothermic engine and the transmission device, also a reversible electric machine, which alternately functions as a motor for driving the vehicle or as a generator for recharging the storage groups.

Therefore, the drive torque is mainly produced by the endothermic engine, with assistance from the electric machine when it is actuated as a motor.

In the (extended range) series hybrid configuration, the propulsion group usually comprises at least one electric propulsion machine, connected to the drive system, and a motor generator adapted to generate electrical energy that can be selectively intended to power supply the electric propulsion machine or to charge the storage groups.

The motor generator comprises an internal combustion engine and an electric generator mechanically coupled to the internal combustion engine in order to be actuated.

The electric current generated by the electric generator actuated by the internal combustion engine is transferred to the electric propulsion machine and/or to the provided energy storage groups.

Today, the motor generators in question have a direct mechanical connection between the internal combustion engine and the electric generator.

More in detail, the electric generator has its rotor coupled directly to the shaft of the internal combustion engine, with which the rotor is coaxial.

Such motor generators therefore have the internal combustion engine and the electric generator aligned with each other, so as to have the shaft of the internal combustion engine coaxial with the rotor of the electric generator.

One drawback of the currently known motor generators described herein consists of their considerable longitudinal bulk, i.e. along the common axis of the shaft of the engine and the rotor of the electric generator.

In the field of the known series hybrid vehicles described up to now, there is the particular need to arrange motor generators of flexible application, i.e. which can be controlled in a manner easily adaptable to the functioning needs of the vehicle in general and in particular of its electric propulsion machine.

Known from the English patent GB 2450985 is a motor generator comprising an internal combustion engine and an electric generator having a rotor mechanically connected to the drive shaft for the transmission of a drive torque through a belt. The motor generator comprises a clutch unit, pneumatically actuated, provided with a drive plate and a driven plate. The mechanical selection of the specific clutch employed does not allow minimizing the bulk of the motor generator, nor does it allow being integrated in an optimal manner with the characteristics of an engine intended to function at substantially constant speed in a motor generator for hybrid drive.

Document US 2,493,894 and US 3,240,301 describes known clutch units of sewing machines which comprise a drive plate and a driven plate mounted on the drive shaft of an electric motor of the sewing machine, wherein the driven plate is mechanically connected to the operating body of the sewing machine by means of a belt transmission.

The clutch units described in US 2,493,894 and US 3,240,301 have constructional features suitable for use only in sewing machines, and are not suitable for applications in the technical field of motor generators for vehicles .

Document JP 2005121147 describes a motor generator of a vehicle, which comprises an internal combustion engine connected to an electric motor by means of a clutch unit for transmitting a drive torque to the electric motor. More in detail, the clutch unit is provided with a drive plate mounted on the drive shaft of the engine and with a driven plate mounted on the shaft of the electric motor which is aligned with the drive shaft of the engine.

The main drawback of the motor generator described in JP 2005121147 is due to its considerable longitudinal bulk and to its high constructional complexity

Presentation of the invention

The problem underlying the present invention is therefore that of meeting the need for application flexibility left unmet by motor generators of known type, by providing a motor generator which has flexible application and which allows being controlled in a manner easily adaptable to the contingent functioning conditions of the vehicle on which it is installed.

In the scope of such task, one object of the present invention allows overcoming the drawbacks of the motor generators known today by proposing a motor generator which has lower longitudinal bulk than that of the known motor generators.

Another object of the present invention is to propose a motor generator that has a flexible configuration, i.e. its internal combustion engine and its electric generator can even be non-aligned.

Another object of the present invention is to propose a motor generator for hybrid propulsion vehicles that allows the mechanical connection between its internal combustion engine and the drive system of the vehicle.

This task, as well as these objects and others which will be clearer below, are attained by a motor generator according to the invention as defined in claims 1-10.

Brief description of the drawings

The technical characteristics of the finding, according to the proposed task and objects, can be clearly found in the contents of the below-reported claims, and the advantages of the same will be more evident in the detailed description of an embodiment of a motor generator for hybrid vehicles according to the invention, illustrated as a non-limiting example in the enclosed drawing set in which:

- Figure 1 illustrates a simplified scheme of a motor generator according to the present invention;

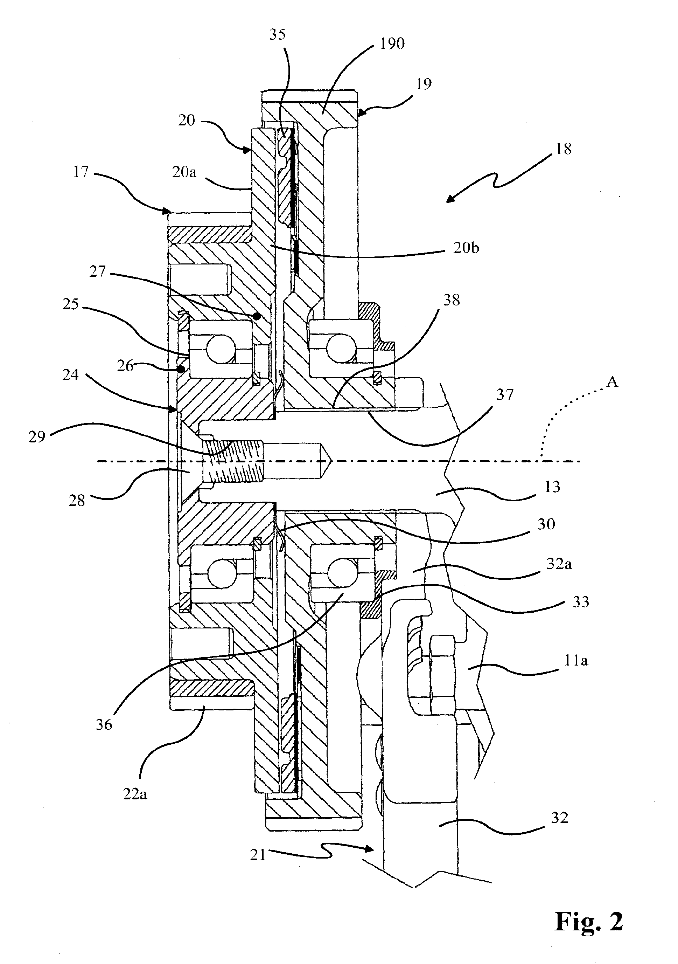

- Figure 2 illustrates a section along a diameter plane of a clutch unit of a motor generator according to the present invention.

Detailed description of a preferred embodiment

With reference to the enclosed drawings, a motor generator for hybrid propulsion vehicles is indicated in its entirety with 10.

The motor generator 10 is intended to be advantageously employed for vehicles intended for movement both in urban and extra-urban settings.

Its use is particularly advantageous in small-size vehicles which have an engine space of rather limited volume, and hence require high compactness of the components that constitute the propulsion group.

In addition, in such vehicles, the engine space tends to have a mainly vertical extension and thus the use of the motor generator 10 results particularly advantageous due to the compactness in the horizontal plane that it has during use, as will be more clearly seen in the following description.

The motor generator 10 comprises an internal combustion engine 11 advantageously with two cylinders, which are suitably opposite each other.

Preferably, the internal combustion engine 11 is a two-cylinder boxer engine, preferably with controlled ignition, and has rotating inertial masses having polar moments of inertia adapted to give the internal combustion engine 11 a cyclic irregularity $\delta$ substantially ranging from 0.031 to 0.033 at a rotational speed substantially ranging from 2800 rpm to 3200 rpm.

Preferably, the internal combustion engine 12 has a cyclic irregularity $\delta$ substantially equal to 0.032 at a rotational speed substantially equal to 3000 rpm.

By cyclic irregularity $\delta$, it is intended the ratio between the difference between the maximum value $\omega_{max}$ and the minimum value $\omega_{min}$ of the instantaneous angular speed of the drive shaft 12 and the average angular speed $\omega_{med}$ of the drive shaft 12, i.e. in formula:

$$\delta = (\omega_{max} - \omega_{min}) / \omega_{med}$$

The average angular speed $\omega_{med}$ is given by the arithmetic mean between the maximum value $\omega_{max}$ and the minimum value $\omega_{min}$ of the instantaneous angular speed of the drive shaft 12.

The internal combustion engine 11, due to its low cyclic irregularity $\delta$, has a high stability that allows the use thereof at a substantially fixed rotational speed that is also particularly low, i.e. equal to about 3000 rpm.

The internal combustion engine 11 has a drive shaft 12 which has a rotation axis A and an end section 13.

The drive shaft 12 has a moment of inertia whose ratio with the piston displacement of the internal combustion engine 11 is conveniently equal to about 0.0056 kg·m$^2$/l. Advantageously, the internal combustion engine 11 also has a piston displacement equal to about 450cc and hence the drive shaft 12 suitably has a moment of inertia substantially equal to 0.0025 Kg·m$^2$.

During the use of the motor generator 10, the internal combustion engine 11 advantageously functions at a rotational speed suitably ranging from 2800 rpm to 3200 rpm and preferably equal to about 3000 rpm.

Thus, the preferred low cyclic irregularity of internal combustion engine 11, substantially equal to 0.032, causes an optimum stability of the internal combustion engine 11 at the speed preferably selected substantially equal to 3000 rpm.

In addition, the internal combustion engine 11 suitably has a ratio between the piston stroke and the cylinder bore substantially equal to 1.

Such technical selection, combined with the preferred rotational speed of about 3000 rpm, allows obtaining high efficiencies of the internal combustion engine 11.

In addition, the preferred rotational speed of 3000 rpm involves reduced dynamic stresses, to the advantage of the efficiency duration of the internal combustion engine 11.

The motor generator 10 also comprises an electric generator 14 which has a rotor 15 mechanically connected to the end section 13 of the drive shaft 12, for the transmission of a drive torque.

Advantageously, the electric generator has a reversible electric motor, which thus can function as a starting motor for the internal combustion engine 11.

In particular, mechanical transmission means 16 are provided, which interconnect the end section 13 to the rotor 15 of the electric generator 14; as a non-limiting example, they can comprise a belt transmission 17, as illustrated in the enclosed figures, or a chain transmission.

According to the invention, the motor generator 10 has a particular characteristic in that the mechanical transmission means 16 comprise a clutch unit 18 which is provided with a drive plate 19 and a driven plate 20, both mounted on the end section 13 as will be described in more detail below, and actuation means 21 acting on the drive plate 19 in order to couple it to the driven plate 20 for the transmission of a drive torque between these.

Therefore, unlike the clutch units of conventional use in the automobile field, which have a drive plate borne by a drive shaft and a driven plate borne by a driven shaft, the clutch unit 16 has the particular characteristic of having both the plates 19 and 20 borne by the drive shaft 12, and borne by the end section 18 of the drive shaft 12 which is suitably projectingly extended from the body 11a of the internal combustion engine 11.

In this manner, the clutch unit 16 is exclusively borne by the internal combustion engine 11.

Therefore, according to the present invention, the clutch unit 16 allows a flexibility of positioning of the motor generator 14 with respect to the internal combustion engine 11 much greater than that of the motor generators known today, in particular because the motor generator 14 is not constrained to collaborate the clutch unit 16, as instead occurs today for the gear shift groups.

Indeed, today the known gear shift groups, in the current automobile field technique, have a driven shaft which bears the driven plate of the clutch unit, while at the same time the drive shaft of the internal combustion engine bears the drive plate of the clutch unit, thus collaborating with the gear shift group to bear the clutch unit.

Returning to the description of the clutch unit 16, the drive plate 19 is slidably coupled to the end section 13, in sliding relationship along the rotation axis A of the drive shaft 12.

In addition, the drive plate 19 is borne by the end section 13 of the drive shaft 12 in a position facing the driven plate 20.

In such a manner, the drive plate 19 is slidably reversible along the end section 13 so as to be selectively thrust against the driven plate 20, in order to transmit torque to the electric generator 14, or instead to be moved away from the driven plate 20 in order to uncouple the internal combustion engine 11 from the electric generator 14.

The driven plate 20 is rotatably coupled to the end section 13 of the drive shaft 11 facing the drive plate 19 and susceptible of rotating around the rotation axis A.

In addition, the driven plate 20 is mechanically connected to the rotor 15 of the electric generator 14 for the transmission of a drive torque, conveniently by means of the belt transmission 17.

More in detail, advantageously, the belt transmission 17 comprises a first pulley 22a integral with the driven plate 20, a second pulley 22b integral with the rotor 15 and a belt 23 closed in a ring, partially wound on the pulleys 22a and 22b and stretched between these in order to transmit drive torque between the pulleys 22a and 22b.

The actuation means 21 are mechanically connected to the drive plate 19, to actuate the sliding thereof on the end section 13 along the rotation axis A between a first position and a second position.

Such actuation means 21 preferably comprise an electromechanical actuator, e.g. constituted by an induction linear actuator.

In the first position, the drive plate 19 is coupled with the driven plate 20, for the integral rotation thereof around the rotation axis A.

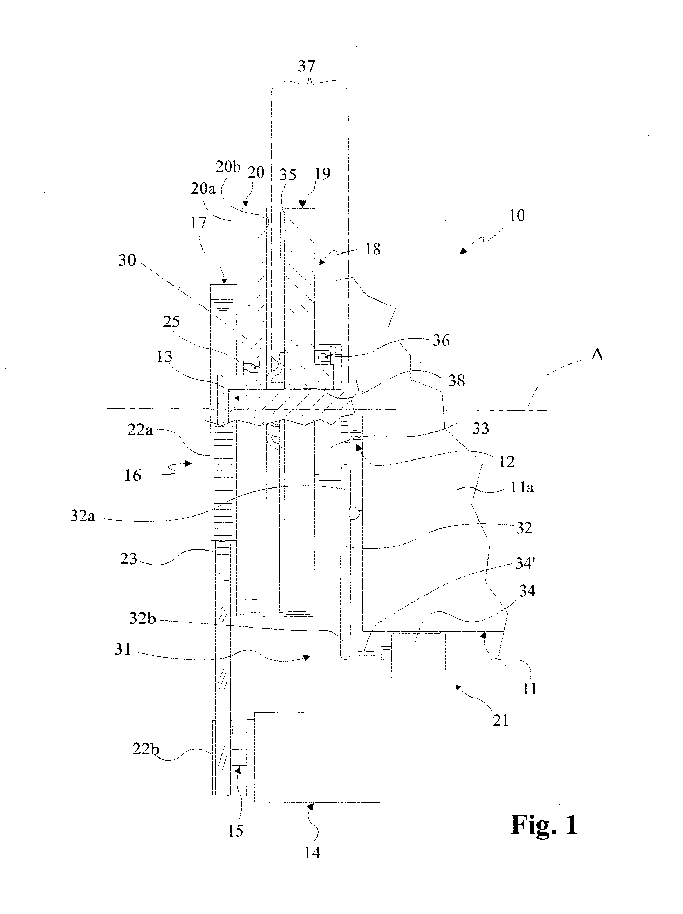

Instead, in the second position, the drive plate 19 is spaced from the driven plate 20, for the mutual free rotation thereof, as a non-limiting example illustrated in figure 1.

In such second position, therefore, the drive plate 19 during the functioning of the internal combustion engine 11 rotates integrally with the drive shaft 12, while the driven plate 20 is idle with respect to the drive plate 19.

In more detail, the motor generator 10 comprises a support bushing 24 for the driven plate 20, fit on the end section 13 of the drive shaft 12 and rigidly fixed thereto.

Suitably, the driven plate 20 is fit on the bushing 24, with respect to which it is conveniently in a rotation relationship around the rotation axis A.

In more detail, the bushing 24 is advantageously coaxially fixed to the end section 13 of the drive shaft 12, suitably on the free end 13a of the end section 13, which is extended from the body 11a of the internal combustion engine 11.

Conveniently, the bushing 24 is integrally fixed to the end section 13 by means of a screw 28 tightened in a threaded seat 29 provided on the free end 13a of the end section 13.

The aforesaid mechanical configuration, with the driven plate 20 mounted at the end section 13 of the shaft and radially outside the bushing 24, allows reducing the axial bulk A of the motor generator.

The motor generator 10 also comprises sliding means, interposed between the bushing 24 and the driven plate 20, suitably for allowing the idle rotation of the driven plate 20 on the bushing 24.

The sliding means are advantageously obtained by means of a first bearing 25, which is suitably of rolling type, and preferably is of thrust type, i.e. capable of resisting a thrust stress in the direction of the rotation axis A.

In alternative and substantially equivalent embodiments of the invention, the sliding means can comprise even more than one bearing or an equivalent mechanical element adapted to allow an easy sliding between the driven plate 20 and the end section 13 of the drive shaft 12, in accordance with the contingent actuation needs of the invention. Advantageously, therefore, the drive plate 19 is interposed between the driven plate 20 and the body 11a of the internal combustion engine 11.

In addition, suitably, the first pulley 22a projects from a first face 20a of the driven plate 20, opposite a second face 20b thereof which is facing towards the drive plate 19. In such a manner, the first pulley 21 results exposed on the side of the internal combustion engine 11, from which the end section 13 projects of the drive shaft 12, and thus is easily accessible during maintenance operations of the belt transmission 17, such as in possible belt 23 substitution operations.

Preferably, the bushing 24 has a first shoulder 26 facing towards the drive plate 19, the driven plate 20 suitably has a second shoulder 27 facing towards the first shoulder 26 and the first bearing 25 is interposed between the shoulders 26 and 27 in order to prevent the driven plate 20 from slipping off the bushing 24.

The bushing 24 is, as said, conveniently integrally fixed to the end section 13 by means of a screw 28 tightened in a threaded seat 29 provided in the end section 13.

The threaded seat 29 is suitably coaxial with the rotation axis A.

In alternative embodiments of the invention, not further described or illustrated here in the enclosed figures, in a substantially equivalent manner the bushing 24 can be fixed to the end section 13 by means of a plurality of screws, according to contingent needs.

The actuation means 21 also comprise elastic means for setting apart the plates 20 and 19, which preferably comprise at least one substantially annular leaf spring 30 fit on the end section 13 of the shaft and inserted between the bushing 24 and the drive plate 19, to oppose the approaching of the drive plate 19 to the driven plate 20.

The drive plate 19 of the clutch unit 16 is provided with an enlarged peripheral portion 190 adapted to define a flywheel for the internal combustion engine 11 and thus increase its moment of inertia. The particular constant rpm at which the engine functions (2800 rpm to 3200 rpm) is equalized, also due to the presence of the aforesaid flywheel.

The aforesaid enlarged peripheral portion 190 of the drive plate 19 is also axially extended at the driven plate 20, i.e. radially with respect thereto and to its external cover so as to contain the axial extension of the motor generator.

The actuation means 21 also comprise a pushing device 31 adapted to push the drive plate 19 against the driven plate 20 in opposition to the elastic means, and in particular to the leaf spring 30.

More in detail, the pushing device 31 advantageously comprises an electromechanical actuator 34, for example constituted by an induction linear actuator provided with a stem 34' and a lever 32 pivoted on the body 11a of the internal combustion engine 11 mechanically connected to the stem 311 (i.e. in abutment thereon) and actuated to be moved by the linear actuator 310.

Suitably, the lever 32 has a first end 32a conveniently juxtaposed on the drive plate, the first end 32a being adapted to push the drive plate 19 against the driven plate 20 when the lever 32 is actuated.

For such purpose, the lever 32 is conveniently able to be swung with respect to the body 11a of the internal combustion engine 11.

The pushing device 31 also suitably comprises an abutment element 33, preferably annular, mounted on the drive plate 19, and advantageously coaxial thereto, the abutment element 33 being in a rotation relationship around the rotation axis A with respect to the drive plate 19.

The abutment element 33 is conveniently susceptible of receiving the first end 32a of the lever 32 in abutment and thrust.

The actuator 34 is therefore susceptible of actuating the lever 32 in a swinging manner by alternately

- pushing the first end 32a thereof against the abutment element 33 in a manner so as to couple the plates 20 and 19 together, or vice versa,
- retracting the second end 32a with respect to the abutment element 33 in a manner so as to allow separating the plates 20 and 19.

Thus, suitably when the drive plate 19 is in said first position, it is thrust against the driven plate 20 by the lever 32 which has its first end 32a in thrust against the abutment element 33 by means of the actuator 34.

Instead, when the drive plate 19 is in said second position, it is conveniently set apart from the driven plate 20 by means of the elastic means, i.e. by the leaf spring 30, at the same time the actuator 34 releasing the thrust of the first end 32a of the lever on the abutment element 33.

More in detail, in order to couple the drive plate 19 to the driven plate 20, the actuator 34 swings the lever 32 in a manner such that the end 32a thereof pushes on the abutment element 33, causing the sliding of the drive plate 19 on the end section 13 along the rotation axis A towards the driven plate 20, in opposition to the elastic reaction of the leaf spring 30.

The drive plate 19 is thrust by the lever 32 and forced against the driven plate 20, obtaining the coupling thereof via friction.

In order to obtain an effective transmission of the torque between the plates 20 and 19, at least one preferably annular clutch unit 35 is advantageously provided, interposed between the driven plate 20 and the drive plate 19 to which it is conveniently rigidly fixed, preferably in a coaxial manner.

The motor generator also comprises at least one second bearing 36, suitably interposed between the drive plate 19 and the abutment element 33.

The drive plate 19 suitably bears the second bearing 36 on which the abutment element 33 is mounted.

The second bearing 36 defines a free mutual rotation relationship of the abutment element 33 on the drive plate 19, around the rotation axis A.

In such a manner, during the rotation of the drive shaft 11, the drive plate 19 rotates integrally with the drive shaft 11 while the abutment element 33 remains suitably stopped with respect to the lever 32 which preferably has its first end 32a in abutment on the abutment element 33, suitably by means of the leaf spring 30.

More in detail, the first end 32a of the lever 32 is shaped as a fork and forks the end section 13 of the drive shaft 12 in order to operate on the abutment element 33 at opposite sides of the end section 13.

In addition, advantageously, the actuator 34 is mechanically connected to the second end 32b of the lever 32, opposite the first end 32a thereof.

The end section 13 of the drive shaft 12 advantageously has at least one longitudinally grooved section 37, the drive plate 19 having an internally toothed hole 38 complementary to the longitudinally grooved section 37.

The longitudinally grooved section 37 and the internally toothed hole 38 are suitably coupled together, defining a sliding relationship of the drive plate 19 on the end section 13 along the rotation axis A.

In this manner, the drive plate 19 can slide along the longitudinally grooved section 37 of the end section 13, in order to be coupled to or separated from the driven plate 20. However, the drive plate 19 is integral in rotation around the rotation axis A due to the coupling of the internally toothed hole 38 with the longitudinally grooved section 37.

It has been practically established that a motor generator according to the finding attains the preset task and objects, having flexible application or rather allowing its control in a manner easily adaptable to the contingent functioning conditions of the vehicle on which it is installed.

Indeed, the motor generator 10 due to the presence of the clutch unit 18 results on command couplable and uncouplable to/from the electric generator 14.

Thus, for example if the electric generator 14 is a reversible electric motor, this can be employed for cooperating with the electric machine that acts as vehicle propeller, by providing for the possibility to power supply it by simultaneously coupling it to the vehicle drive system.

In addition, a motor generator according to the present invention has a longitudinal bulk that is less than that of currently-known motor generators.

Indeed, the motor generator 10 has the internal combustion engine 11 which can be superimposed on or placed alongside the electric generator 14, due to the belt transmission 17 which allows arranging the electric generator 14 in the engine space of a vehicle substantially in any one position flanking the internal combustion engine 11, with the only constraint of parallelism between rotation axis A of the drive shaft 12 and the axis of the rotor 15 of the electric generator 14.

In particular, therefore, a motor generator according to the present invention has flexible installation configurations, i.e. its internal combustion engine and its electric generator can even be non-aligned.

A motor generator for hybrid propulsion vehicles according to the present invention also allows the mechanical connection between its internal combustion engine and the vehicle drive system; indeed, it is sufficient to provide for a mechanical connection activatable between (for example) the vehicle drive system and the rotor 15 of the electric generator 14, in order to allow that by means of the clutch unit 18, the internal combustion engine 11 actuates the vehicle drive system, e.g. for the propulsion of the vehicle in case of functioning failure of the electric machine adapted for the propulsion thereof.

According to the present invention, a motor generator for hybrid propulsion vehicles results structurally simple, easy to manufacture and it can be produced with relatively reduced costs.

**Claims**

1. Motor generator (10), comprising:

   - an internal combustion engine (11) having a drive shaft (12) provided with an end section (13) and with a rotation axis (A);
   - an electric generator (14) having a rotor (15) mechanically connected to the end section (13) of said drive shaft (12), for the transmission of a drive torque;
   - mechanical transmission means (16) for interconnecting the end section (13) of said drive shaft (12) to the rotor (15) of said electric generator (14);

   said mechanical transmission means (16) comprising a clutch unit (17) provided with:

   - a drive plate (19) mounted on the end section (13) of said drive shaft (12) and susceptible of sliding along said end section (13) along the rotation axis (A) of said drive shaft (12),
   - a driven plate (20) mounted on the end section (13) of said drive shaft (12) facing said drive plate (19), susceptible of rotating around said drive shaft (12) and mechanically connected to the rotor (15) of said electric generator (14) for the transmission of said drive torque,
   - actuation means (21) mechanically acting on said drive plate (19), to actuate the sliding thereof along the end section (13) of said drive shaft (12)

     · between a first position in which said drive plate (19) is coupled with said driven plate (20), for the integral rotation thereof around said rotation axis (A); and
     · a second position in which said drive plate (19) is spaced from said driven plate (20), for the mutual free rotation thereof;

   said drive plate (19) and said driven plate (20) both being supported by the end section (13) of said drive shaft (12);
   said motor generator being **characterized in that** said clutch unit (17) is further provided with:

   - a support bushing (24) for said driven plate (20) being fit on the end section (13) of said drive shaft (12) and rigidly fixed thereto, said driven plate (20) being fit on said bushing (24),
   - sliding means interposed between said bushing (24) and said driven plate (20) for the idle rotation of said driven plate (20) on said bushing (24);

   said actuation means (21) comprising:

   - elastic means for setting apart said plates (20, 19),
   - a pushing device (31) adapted to push said drive plate (19) against said driven plate (20) in opposition to said elastic means;

   said pushing device (31) comprising an abutment element (33) mounted on said drive plate (19), the abutment element (33) being in a rotation relationship around said rotation axis (A) with respect to said drive plate (19);
   said motor generator further comprising at least one second bearing (36) coaxially borne on said drive plate (19), the abutment element (33) of said actuation means (21) being mounted on said at least one second bearing (36), said at least one second bearing (36) defining a free mutual rotation relationship of said abutment element (33) on said drive plate (19) with respect to said rotation axis (A).

2. Motor generator according to claim 1, **characterized in that** the drive plate (19) of said clutch unit (16) is provided with an enlarged peripheral portion (190) forming a flywheel for said internal combustion engine (11).

3. Motor generator according to claim 2, **characterized in that** the enlarged peripheral portion (190) of said drive plate (19) is axially extended for an external cover section of said driven plate (20).

4. Motor generator according to claim 1, **characterized in that** said sliding means comprise at least a first bearing (25), said bushing (24) having a first shoulder (26) facing towards said drive plate (19), said driven plate (20) having a second shoulder (27) facing towards said first shoulder (26), said at least a first bearing (25) being interposed between said shoulders (26, 27) in order to prevent said driven plate (20) from slipping off said bushing (24).

5. Motor generator according to claim 1, **characterized in that** said pushing device (31) comprises

   - a lever (32) pivoted on the body of said internal combustion engine (11) having a first end (32a) for pushing said drive plate (19) against said driven plate (20), said lever (32) being able to be swung with respect to the body of said internal combustion engine (11),

- an abutment element (33) mounted on said drive plate (19) in a rotation relationship around the rotation axis (A) of said drive shaft (12), susceptible of receiving in abutment and thrust the first end (32a) of said lever (32),

- an actuator (34) mechanically connected to said lever (32) and susceptible of actuating said lever (32) in a swinging manner,

said drive plate (19) being, for the coupling of said plates (19, 20), thrust against said driven plate (20) by said lever (32) having its first end (32a) in thrust against said abutment element (33), and said drive plate (19) being, for the uncoupling of said plates (19, 20), set apart from said driven plate (20) by said elastic means.

6. Motor generator according to claim 5, **characterized in that** said elastic means comprise at least one substantially annular leaf spring (30) fit on the end section (13) of said shaft and inserted between said bushing (24) and said drive plate (19) to oppose the approaching of said drive plate (19) to said driven plate (20).

7. Motor generator according to claim 5 or 6, **characterized in that** the first end (32a) of said lever (32) is shaped as a fork and forks the end section (13) of said drive shaft (12) in order to act on said abutment element (33) at opposite sides of said end section (13).

8. Motor generator according to any one of the preceding claims, **characterized in that** the end section (13) of said drive shaft (12) has at least one longitudinally grooved section (37), said drive plate (19) having an internally toothed hole (38) complementary to said at least one longitudinally grooved section (37), said longitudinally grooved section (37) and said toothed hole being coupled to define a coupling of said drive plate (19) with said end section (13) in sliding relationship along said rotation axis (A).

9. Motor generator according to any one of the preceding claims, **characterized in that** said internal combustion engine (11) is a two-cylinder boxer engine and has rotating inertial masses having polar moments of inertia adapted to give said internal combustion engine (11) a cyclic irregularity substantially ranging from 0.031 to 0.033 at a rotational speed substantially ranging from 2800 rpm to 3200 rpm.

10. Motor generator according to any one of the preceding claims, **characterized in that** said internal combustion engine (11) is a two-cylinder boxer engine and has inertial masses.

**Patentansprüche**

1. Motorgenerator (10), der Folgendes umfasst:

- einen Verbrennungsmotor (11) mit einer Motorwelle (12), die mit einem Endabschnitt (13) und einer Drehachse (A) ausgestattet ist;
- einen Elektrogenerator (14) mit einem Rotor (15), der mechanisch an den Endabschnitt (13) der genannten Motorwelle (12) angeschlossen ist, um ein Antriebsdrehmoment zu übertragen;
- Elemente der mechanischen Übertragung (16) zur Zwischenverbindung des Endabschnitts (13) der genannten Motorwelle (12) mit dem Rotor (15) des genannten Elektrogenerators (14);

wobei die genannten Elemente der mechanischen Übertragung (16) eine Kupplungsgruppe (17) umfassen, die mit Folgendem ausgestattet ist:

- einer Antriebsscheibe (19), die auf den Endabschnitt (13) der genannten Motorwelle (12) montiert und geeignet ist, entlang des Endabschnitts (13) in Richtung der Drehachse (A) der genannten Motorwelle (12) zu gleiten,
- einer angetriebenen Scheibe (20), die auf den Endabschnitt (13) der genannten Motorwelle (12) gegenüberliegend zu der genannten Antriebsscheibe (19) montiert und geeignet ist, um die genannte Motorwelle (12) zu drehen und zur Übertragung des genannten Antriebsmoments mechanisch mit dem Rotor (15) des genannten Elektrogenerators (14) verbunden ist,
- Betätigungselementen (21), die mechanisch auf die genannte Antriebsscheibe (19) wirken, um deren Gleiten entlang des Endabschnitts (13) der genannten Motorwelle (12)

· zwischen einer ersten Position, in der die genannte Antriebsscheibe (19) mit der genannten angetriebenen Scheibe (20) zu ihrer gemeinsamen Drehung um die genannte Drehachse (A) gekoppelt ist; und
· einer zweiten Position, in der sich die genannte Antriebsscheibe (19) im Abstand zu der genannten angetriebenen Scheibe (20) befindet, damit sie gegenseitig frei drehen können, herbeiführt;

wobei die genannte Antriebsscheibe (19) und die genannte angetriebene Scheibe (20) beide von dem Endabschnitt (13) der genannten Motorwelle (12) getragen werden; wobei der genannte Motorgenerator **dadurch gekennzeichnet ist, dass** die genannte Kupplungsgruppe (17) außerdem mit Folgendem ausgestattet ist:

- einer Lagerbuchse (24) für die genannte angetriebene Scheibe (20), die auf dem Endabschnitt (13) der genannten Motorwelle (12) sitzt und mit dieser fest verbunden ist, da die genannte angetriebene Scheibe (20) auf dieser genannten Lagerbuchse (24) sitzt,

- Gleitvorrichtungen zwischen der genannten Lagerbuchse (24) und der genannten angetriebenen Scheibe (20) für das freie Drehen der genannten angetriebenen Scheibe (20) auf der genannten Lagerbuchse (24);

Betätigungsvorrichtungen (21), die Folgendes umfassen:

- elastische Vorrichtungen zum Spreizen der genannten Scheiben (20, 19),
- eine Schubvorrichtung (31), die geeignet ist, die genannte Antriebsscheibe (19) gegen die genannten elastischen Spreizvorrichtungen wirkend gegen die genannte angetriebene Scheibe (20) zu drücken;

wobei die genannte Schubvorrichtung (31) ein Anschlagelement (33) umfasst, das auf der genannten Antriebsscheibe (19) montiert ist und das Anschlagelement (33) im Verhältnis zu der genannten Antriebsscheibe (19) in einem Drehverhältnis um die genannte Drehachse (A) steht; wobei der genannte Motorgenerator außerdem wenigstens ein zweites Lager (36) umfasst, das koaxial auf der genannten Antriebsscheibe (19) getragen wird und das Anschlagelement (33) der genannten Betätigungsvorrichtungen (21) auf dem genannten wenigstens einem zweiten Lager (36) montiert ist und das genannte wenigstens zweite Lager (36) ein Verhältnis der gegenseitigen freien Drehung des genannten Anschlagelements (33) auf der genannten Antriebsscheibe (19) im Verhältnis zu der genannten Drehachse (A) definiert.

**2.** Motorgenerator nach Anspruch 1, **dadurch gekennzeichnet, dass** die Antriebsscheibe (19) der genannten Kupplungsgruppe (16) mit einem verbreiterten umlaufenden Teil (190) versehen ist, der ein Schwungrad für den genannten Verbrennungsmotor (11) bildet.

**3.** Motorgenerator nach Anspruch 2, **dadurch gekennzeichnet, dass** der verbreiterte umlaufende Teil (190) der genannten Antriebsscheibe (19) axial über einen Außenverkleidungsabschnitt der genannten angetriebenen Scheibe (20) verläuft.

**4.** Motogenerator nach Anspruch 1, **dadurch gekennzeichnet, dass** die genannten Gleitvorrichtungen wenigstens ein erstes Lager (25) umfassen, wobei die genannte Lagerbuchse (24) einen ersten Ansatz (26) aufweist, der zu der genannten Antriebsscheibe (19) gerichtet ist und die genannte angetriebene Scheibe (20) einen zweiten Ansatz (27) aufweist, der zu dem genannten ersten Ansatz (26) gerichtet ist, wobei das genannte wenigstens eine erste Lager (25) sich zwischen den genannten Ansätzen (26, 27) befindet, um das Heruntergleiten der genannten angetriebenen Scheibe (20) von der genannten Lagerbuchse (24) zu vermeiden.

**5.** Motorgenerator nach Anspruch 1, **dadurch gekennzeichnet, dass** die genannte Schubvorrichtung (31) Folgendes umfasst:

- einen Hebel (32) mit Hebelpunkt auf dem Körper des genannten Verbrennungsmotors (11), der ein erstes Ende (32a) umfasst, um die genannte Antriebsscheibe (19) gegen die genannte angetriebene Scheibe (20) zu drücken, wobei der Hebel (32) im Verhältnis zum Körper des genannten Verbrennungsmotors (11) kippbar ist,
- ein auf der Antriebsscheibe (19) in einem Drehverhältnis um die Drehachse (A) der genannten Motorwelle (12) montiertes Anschlagelement (33), das geeignet ist, dem ersten Ende (32a) des genannten Hebels (32) als Anschlag zu dienen,
- einen mechanisch mit dem genannten Hebel (32) verbundenen Stellantrieb (34), der geeignet ist, die Kippbewegung des genannten Hebel (32) auszulösen,

da zur Kupplung der genannten Scheiben (19, 20) die genannte Antriebsscheibe (19) von dem genannten Hebel (32) gegen die angetriebene Scheibe (20) gedrückt wird, wobei dessen erstes Ende (32a) gegen das genannte Anschlagselement (33) anschlägt und durch das Entkuppeln der genannten Scheiben (19, 20) die genannte Antriebsscheibe (19) von der genannten angetriebenen Scheibe (20) durch die genannten elastischen Vorrichtungen abgespreizt wird.

**6.** Motorgenerator nach Anspruch 5, **dadurch gekennzeichnet, dass** die genannten mechanischen Vorrichtungen wenigstens eine Blattfeder (30) umfassen, die im Wesentlichen ringförmig auf den Endabschnitt (13) der genannten Welle gesetzt ist und zwischen der genannten Lagerbuchse (24) und der genannten Antriebswelle (19) zwischengelagert ist, um dem Annähern der genannten Antriebsscheibe (19) an die genannte angetriebene Scheibe (20) entgegenzuwirken.

**7.** Motorgenerator nach Anspruch 5 oder 6, **dadurch gekennzeichnet, dass** das erste Ende (32a) des genannten Hebels (32) gabelförmig ist und den Endabschnitt (13) der genannten Motorwelle (12) aufnimmt, um auf dem genannten Endabschnitt (13) gegenüberliegenden Seitenteilen auf das genannte Anschlagelement (33) zu wirken.

8. Motorgenerator nach einem beliebigen der vorangegangenen Ansprüche, **dadurch gekennzeichnet, dass** der Endabschnitt (13) der genannten Motorwelle (12) wenigstens einen genuteten Längsabschnitt (37) aufweist, wobei die genannte Antriebsscheibe (19) eine innen gezahnte Öffnung (38) aufweist, die das Gegenstück zu dem genannten wenigstens einen genuteten Längsabschnitt (37) bildet und dieser genannte genutete Längsabschnitt (37) und die genannte gezahnte Öffnung miteinander verbunden eine Kupplung der genannten Antriebsscheibe (19) mit dem genannten Endabschnitt (13) in einem Gleitverhältnis entlang der Drehachse (A) definieren.

9. Motorgenerator nach einem beliebigen der vorangegangenen Ansprüche, **dadurch gekennzeichnet, dass** es sich bei dem genannten Verbrennungsmotor (11) um einen Zwei-Zylinder-Boxermotor mit drehenden Trägheitsmassen handelt, deren polare Trägheitsmomente geeignet sind, dem genannten Verbrennungsmotor (11) eine zyklische Unregelmäßigkeit zwischen 0,031 und 0,033 bei einer Drehzahl im Wesentlichen zwischen 2800 rpm und 3200 rpm zu verleihen.

10. Motorgenerator nach einem beliebigen der vorangegangenen Ansprüche, **dadurch gekennzeichnet, dass** es sich bei dem genannten Verbrennungsmotor (11) um einen Boxermotor mit Trägheitsmassen handelt.

**Revendications**

1. Générateur de moteur (10), comprenant :

   - un moteur à combustion interne (11) ayant un vilebrequin (12) muni d'une partie d'extrémité (13) et d'un axe de rotation (A) ;
   - un électrogénérateur (14) ayant un rotor (15) raccordé mécaniquement à la partie d'extrémité (13) dudit vilebrequin (12) pour la transmission d'un couple moteur ;
   - des moyens de transmission mécanique (16) pour l'interconnexion de la partie d'extrémité (13) dudit vilebrequin (12) au rotor (15) dudit électrogénérateur (14) ;

   lesdits moyens de transmission mécanique (16) comprenant un groupe d'embrayage (17) muni :

   - d'un disque menant (19) monté sur la partie d'extrémité (13) dudit vilebrequin (12) et susceptible de coulisser le long de ladite partie d'extrémité (13) selon l'axe de rotation (A) dudit vilebrequin (12),
   - d'un disque mené (20) monté sur la partie d'extrémité (13) dudit vilebrequin (12) placé en vis à vis avec ledit disque menant (19), susceptible de tourner autour dudit vilebrequin (12) et raccordé mécaniquement au rotor (15) dudit électrogénérateur (14) pour la transmission dudit couple moteur,
   - des moyens d'actionnement (21) agissant mécaniquement sur ledit disque menant (19), pour en actionner le coulissement le long de la partie d'extrémité (13) dudit vilebrequin (12)

   · entre une première position dans laquelle ledit disque menant (19) est accouplé audit disque mené (20), pour leur rotation solidaire autour dudit axe de rotation (A) ; et
   · une deuxième position dans laquelle ledit disque menant (19) est éloigné dudit disque mené (20), pour leur rotation réciproque libre ;

   ledit disque menant (19) et ledit disque mené (20) étant tous les deux soutenus par la partie d'extrémité (13) dudit vilebrequin (12) ;
   ledit générateur de moteur étant **caractérisé en ce que** ledit groupe d'embrayage (17) est muni également de :

   - une douille (24) de support pour ledit disque mené (20) étant calée sur la partie d'extrémité (13) dudit vilebrequin (12) et rigidement fixée sur cette dernière, ledit disque mené (20) étant calé sur ladite douille (24),
   - moyens de coulissement interposés entre ladite douille (24) et ledit disque mené (20) pour la rotation folle dudit disque mené (20) sur ladite douille (24) ;

   moyens d'actionnement (21) comprenant :

   - des moyens élastiques d'écartement desdits disques (20, 19),
   - un dispositif pousseur (31) apte à pousser ledit disque menant (19) contre ledit disque mené (20) en opposition avec lesdits moyens élastiques ;

   ledit dispositif pousseur (31) comprenant un élément de butée (33) monté sur ledit disque menant (19), l'élément de butée (33) étant en rapport de rotation autour dudit axe de rotation (A) par rapport audit disque menant (19) ;
   ledit générateur de moteur comprenant, en outre, au moins un deuxième palier (36) amené de façon coaxiale sur ledit disque menant (19), l'élément de butée (33) desdits moyens d'actionnement (21) étant monté sur ledit au moins deuxième palier (36), ledit au moins deuxième palier (36) définissant un rapport de rotation réciproque libre dudit élément de butée (33) sur ledit disque menant (19) par rapport audit axe de rotation (A).

2. Générateur de moteur selon la revendication 1, **caractérisé en ce que** le disque menant (19) dudit groupe d'embrayage (16) est muni d'une partie périphérique élargie (190) formant un volant pour ledit moteur à combustion interne (11).

3. Générateur de moteur selon la revendication 2, **caractérisé en ce que** la partie périphérique élargie (190) dudit disque menant (19) s'étend axialement pour une partie comme un revêtement extérieur dudit disque mené (20).

4. Générateur de moteur selon la revendication 1, **caractérisé en ce que** lesdits moyens de coulissement comprennent au moins un premier palier (25), ladite douille (24) ayant un premier épaulement (26) tourné vers ledit disque menant (19), ledit disque mené (20) ayant un deuxième épaulement (27) tourné vers ledit premier épaulement (26), ledit au moins premier palier (25) étant interposé entre lesdits épaulements (26, 27) pour empêcher le déboîtement dudit disque mené (20) de ladite douille (24).

5. Générateur de moteur selon la revendication 1, **caractérisé en ce que** ledit dispositif pousseur (31) comprend

    - un levier (32) monté sur pivot sur le corps dudit moteur à combustion interne (11) ayant une première extrémité (32a) pour la poussée dudit disque menant (19) contre ledit disque mené (20), ledit levier (32) pouvant être basculé par rapport au corps dudit moteur à combustion interne (11),
    - un élément de butée (33) monté sur ledit disque menant (19) en rapport de rotation autour de l'axe de rotation (A) dudit vilebrequin (12), susceptible de recevoir en butée et poussée la première extrémité (32a) dudit levier (32),
    - un actionneur (34) raccordé mécaniquement audit levier (32) et susceptible d'actionner le basculement dudit levier (32),

    pour l'accouplement desdits disques (19, 20), ledit disque menant (19) étant poussé contre ledit disque mené (20) par ledit levier (32) ayant sa première extrémité (32a) en poussée contre ledit élément de butée (33) et pour le désaccouplement desdits disques (19, 20), ledit disque menant (19) étant écarté dudit disque mené (20) par lesdits moyens élastiques.

6. Générateur de moteur selon la revendication 5, **ca-**

**ractérisé en ce que** lesdits moyens élastiques comprennent au moins un ressort à lame (30) essentiellement annulaire calé sur la partie d'extrémité (13) dudit vilebrequin et intercalé entre ladite douille (24) et ledit disque menant (19) pour faire opposition au rapprochement dudit disque menant (19) audit disque mené (20).

7. Générateur de moteur selon les revendications 5 ou 6, **caractérisé en ce que** la première extrémité (32a) dudit levier (32) est façonnée en forme de fourche et chausse la partie d'extrémité (13) dudit vilebrequin (12) pour agir sur ledit élément de butée (33) au niveau des flancs opposés de ladite partie d'extrémité (13).

8. Générateur de moteur selon une quelconque des revendications précédentes, **caractérisé en ce que** la partie d'extrémité (13) dudit vilebrequin (12) a au moins une partie longitudinalement rainurée (37), ledit disque menant (19) ayant un trou denté à l'intérieur (38) complémentaire à ladite au moins une partie longitudinalement rainurée (37), ladite partie longitudinalement rainurée (37) et ledit trou denté accouplés définissant un accouplement dudit disque menant (19) avec ladite partie d'extrémité (13) en rapport de coulissement le long dudit axe de rotation (A).

9. Générateur de moteur selon une quelconque des revendications précédentes, **caractérisé en ce que** ledit moteur à combustion interne (11) est un moteur boxer à deux cylindres et a des masses inertielles tournantes ayant des moments d'inertie polaires aptes à donner audit moteur à combustion interne (11) une irrégularité cyclique essentiellement comprise entre 0,031 et 0,033 à un régime de rotation essentiellement compris entre 2 800 tours/min et 3 200 tours/min.

10. Générateur de moteur selon une quelconque des revendications précédentes, **caractérisé en ce que** ledit moteur à combustion interne (11) est un moteur boxer à deux cylindres et a des masses inertielles.

**Fig. 1**

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2450985 A
- US 2493894 A
- US 3240301 A
- JP 2005121147 B